(19)

Europäisches
Patentamt
European
Patent Office
Office européen
des brevets

(11) **EP 2 070 578 A1**

(12) **EUROPEAN PATENT APPLICATION**

(43) Date of publication:
**17.06.2009 Bulletin 2009/25**

(51) Int Cl.:
**B01D 53/62** *(2006.01)*  **C01F 11/18** *(2006.01)*

(21) Application number: **07123303.5**

(22) Date of filing: **14.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicants:
• **Université Joseph Fourier
38041 Grenoble Cedex 9 (FR)**
• **Centre National de la Recherche Scientifique
75794 Paris Cedex 16 (FR)**

(72) Inventors:
• **Montes Hernandez, German
38470, VINAY (FR)**

• **Perez Lopez, Rafael
21006, HUELVA (ES)**
• **Renard, François
38400, SAINT MARTIN D'HERES (FR)**
• **Charlet, Laurent
38660, LE TOURET (FR)**
• **Nieto, José Miguel
21800, MOGUER,HUELVA (ES)**

(74) Representative: **Grosset-Fournier, Chantal
Catherine et al
Grosset-Fournier & Demachy
54, rue Saint-Lazare
75009 Paris (FR)**

(54) **Process for the sequestration of CO2 by reaction with alkaline solid wastes**

(57)  The present invention relates to a process of sequestration of $CO_2$ by reaction with alkaline solid wastes.

EP 2 070 578 A1

**Description**

The present invention relates to a process of sequestration of $CO_2$ by reaction with alkaline solid wastes.

Since several years, environmental concerns has presented an increased interest and the elimination of plant wastes such as alkaline wastes, in particular coal combustion or paper mill wastes, and wastewater become essential in this purpose.

The global warming of Earth's near-surface, air and oceans in recent decades is a direct consequence of anthropogenic emission of greenhouse gases into the atmosphere such as $CO_2$, $CH_4$, $N_2O$ and CFCs (IPCC (Intergovernmental Panel on Climate Change, 2007). The CO2 emissions contribute approximately 60% to this climate change. From the time of the industrial revolution that started the 1860's, 75% of CO2 emissions discharged into the atmosphere are caused by the burning of fossil fuels (26.4 ± 1.1 Gt CO2 yr-1 for the 2000-2005 period), and the remaining 25% by land use change. Although oceans and terrestrial biosphere can take up high amounts of the $CO_2$ emitted, about 45% remains in the atmosphere as stable species that may stay for many hundreds of years (IPCC (Intergovernmental Panel on Climate Change, 2007) The continuous increase of atmospheric $CO_2$ might lead to stress on drinking water availability, species extinction, melting of ice sheets and coastal flooding.

Another major environmental concern is the wastewater treatment. Anions contained in wastewater are typically mobile in soils and groundwater since most natural materials have net negative surface charges. A number of anions, particularly inorganic oxyanions such as chromate, arsenate, molybdate, selenite and selenate, can be toxic to humans or wildlife at $\mu$g/L to mg/L concentrations. The removal of the toxic oxyanions has been achieved by coprecipitation (Roundhill, D. M., Koch, H. F., Chem. Soc. Rev. 31 (2002) 60.; Harper, T. R., Kingham, N. W., Water Environ. Res. 64 (1992) 200), reverse osmometry (Fox, K. R., Sorg, T. J., J. Am. Water Works Assoc. 79 (1987) 81), chemical reduction to less soluble species (Eary, L. E., Rai, D., Environ. Sci. Technol. 28 (1988) 972), and adsorbing colloid flotation (ACF) methods (De Carlo, E. H., Thomas, D. M., Environ. Sci. Technol. 19 (1985) 538; Peng, F. F., Pingkuan, D. Ind. Eng. Chem. Res. 33 (1994) 922). These methods generally need large and complicated facilities due to various equipment and reagents used in a series of treatments. In addition, the removal of toxic oxyanions is much more difficult than that of the cations because anions with a similar, structure, such as sulphate and phosphate often coexist in nature with high concentrations. Searching effective adsorbents, reagents and/or novel methods for the removal of the oxyanions is important for environmental remediation.

An alternative to reduce the $CO_2$ emission without modifying the energy production system is the retention or sequestration of carbon dioxide in stable geological reservoirs (Bachu, S. Sequestration of CO2 in geological media: criteria and approach for site selection in response to climate change. Energy Convers. Manage. 2000, 41, 953-970; Bachu, S. Sequestration of CO2 in geological media in response to climate change: road map for site selection using the transform of the geological space into the CO2 phase space. Energy Convers. Manage. 2002, 43, 87-102; Bachu, S; Adams, J. J. Sequestration of CO2 in geological media in response to climate change: capacity of deep saline aquifers to sequester CO2 in solution. Energy Convers. Manage. 2003, 44, 3151-3175; Friedmann, S. J. Geological Carbon Dioxide Sequestration. Elements 2007, 3, 179-184.).

Such a strategy, so-called geological carbon sequestration, consists of capturing gaseous $CO_2$ from emission sources and injecting it as a supercritical fluid in terrestrial reservoirs, such as saline aquifers, depleted oil and gas fields or deep coal seams. In geological reservoirs, the supercritical $CO_2$ could be retained by stratigraphic or structural trapping (physical isolation), solubility trapping (dissolved in the aqueous phase) and/or hydrodynamic trapping (associated to long residence time of dissolved $CO_2$-bearing fluids in aquifers). However, the main scientific concerns inquiring the geological carbon sequestration applicability are the high pressure and temperature variations caused by the large $CO_2$ accumulation on the reservoirs. These thermodynamic variations could exert forces that diminish the reservoir confinement due to the formation of cracks and faults either in reservoir itself or in the cap rocks.

In terrestrial reservoirs, the $CO_2$ pressure can decrease in the long term as a consequence of another retention mechanism: mineral trapping or mineralogical carbon sequestration. The stored $CO_2$ may transform to stable carbonate minerals by reactions with aqueous ions. Although this mechanism favours the permanent $CO_2$ sequestration, it is expected to be slow in geological formation (hundreds of years) due to the slow kinetics of silicate mineral dissolution and carbonate mineral precipitation. However, mineralogical carbon sequestration could contribute significantly to $CO_2$ sequestration in the proximity of the emission source, without the need of storing the gas into a geological reservoir.

Soong et al. (Soong, Y.; Fauth, D. L.; Howard, B. H.; Jones, J. R.; Harrison, D. K.; Goodman, A. L.; Gray, M. L.; Frommell, E. A. CO2 sequestration with brine solution and fly ashes. Energy Convers. Manage. 2006, 47, 1676-1685) propose the use of mineralogical carbon sequestration in controlled reactors as a viable approach to reduce $CO_2$ emissions into the atmosphere using by-products from coal combustion in power plants (fly-ash) and oil and gas production (brine solutions).

Montes-Hernandez et al. (Montes-Hernandez G., Renard F., Geoffroy N., Charlet L. and Pironon J. (2007) Calcite precipitation from CO2-H2O-Ca(OH)2 slurry under high pressure of CO2. J. Cryst. Growth 308, 228-236) propose an experimental method to synthesize fine particles of calcite by means of aqueous carbonation of pure portlandite at

high pressure of $CO_2$ (initial $P_{CO2}$=55 bar) and moderate and high temperature (30 and 90 °C). However, the use of pure portlandite and other primary minerals may suppose a high economic and environmental cost as these are typically resources and not residues.

Several sequestration processes of $CO_2$ have been developed since many years by reacting with solid waste material at various pressure:

a) some of them working at atmospheric pressure of $CO_2$ using coal in pure water (US 2004/0228788) or lime kiln dust, cement kiln dust or fly-ash in pure water (US 5,792,440). However, the use of atmospheric pressure of $CO_2$ leads to a poor yield and a slow reaction rate *(Domingo et al., J. Calcite precipitation by a high-pressure CO2 carbonation route, J. of Supercritical Fluids, 2006, 36, 202-215).* Moreover, the $CO_2$ transfer being slow at this pressure, the process requires a high pressure reaction chamber *(Domingo et al., J. Calcite precipitation by a high-pressure CO2 carbonation route, J. of Supercritical Fluids, 2006, 36, 202-215).*

b) other working under a high to moderate and constant pressure of $CO_2$ by reaction with solid waste material (such as steel slag or paper bottom ash) in pure water to accelerate the reaction rate (W02007/071633).

However, in order to achieve a high reaction rate, the carbon dioxide concentration must be high, and this has been achieved by applying an elevated carbon dioxide pressure. Furthermore, this process needs a filtration step.

One of the aims of the present invention is to provide a $CO_2$ sequestration process which does not require controlling the $CO_2$ pressure and the pH of the reaction medium.

Another aim of the invention is to provide a $CO_2$ sequestration process allowing the recycling of plant wastes.

Another aim of the invention is to provide a $CO_2$ sequestration process allowing the decontamination of liquid effluents contaminated by pollutants, such as inorganic oxyanions and/or cations.

Still another aim of the invention is to provide a process of sequestration of $CO_2$ under mineral form.

Therefore, in one aspect, the present invention relates to the use of substantially alkaline solid wastes containing accessible CaO and/or $Ca(OH)_2$ for implementing a process of sequestration of $CO_2$ under mineral form and possibly purifying a liquid effluent if contaminated by pollutants such as inorganic oxyanions and/or cations, comprising a step of reacting said alkaline solid wastes with said liquid effluent to form a calcium hydroxide dispersion, at a non isobaric pressure and without external pH adjustment, at a temperature comprised from about 10 to about 60°C.

The expression "alkaline solid waste" refers to residues of industrial operation or process such as fossil fuel combustion (coal fly ash), Municipal Solid Waste Incineration (MSWI bottom ash), paper mill and production of steel (steel slag). These materials are alkaline and contain various oxides such as calcium comprising oxides in particular CaO and/or $Ca(OH)_2$.

The expression "accessible CaO and/or $Ca(OH)_2$" refers to CaO and/or $Ca(OH)_2$ contained in isolated waste or to isolated particles of CaO and/or $Ca(OH)_2$ and easily available to be dispersed in water and/or aqueous solution. The accessibility of CaO and/or $Ca(OH)_2$ can be verified by measuring the pH immediately after the dissolution of CaO and/or $Ca(OH)_2$ in said liquid effluent wherein the pH increases quasi instantaneously to 12.5.

By the expression "sequestration of $CO_2$ under mineral form" is meant that $CO_2$ is entrapped in a mineral, that is $CO_2$ reacts with $Ca(OH)_2$ or a mixture containing $Ca(OH)_2$ to form $CaCO_3$ mineral or a solid mineral containing $CaCO_3$.

By "liquid effluent" is meant a stream flowing out of a body of water, an outflow from a sewer or sewage system, a discharge of liquid waste, as from a factory, a nuclear plant. It can be pure water, or waste water contaminated by pollutants, that is something that pollutes, especially a waste material that contaminates air, soil, or water.

The term "oxyanions" refers to a negatively charged polyatomic ion that contains oxide. Examples of oxyanions, but without being limited to, are included in the following list: arsenate, aluminate, borate, carbonate, nitrite, hyponitrite, molybdate, silicate, phosphate, phosphite, hypophosphite, persulfate, selenite, sulfate, sulfite, hyposulfite, perchlorate, chlorate, chlorite, hypochlorite, chromate, permanganate, manganate, peroxydisulfate, dichromate, pyrophosphate, polyoxometalates such as phosphomolybdate and phosphotungstate or lead, cadmium, copper, or cobalt salts, By "cation" is meant an ion or group of ions having a positive charge and characteristically moving toward the negative electrode in electrolysis. Examples of cations, but without being limited to, are calcium ($Ca^{2+}$), magnésium ($Mg^{2+}$), sodium ($Na^+$), potassium ($K^+$) and ammonium ($NH_4^+$).

The expression "calcium hydroxide dispersion" refers to calcium hydroxide particles in suspension, i.e. not dissolved, in the liquid effluent. Said calcium hydroxide dispersion is formed by the irreversible hydration of lime in water:

$$CaO + H_2O \rightarrow Ca(OH)_2$$

By "non isobaric pressure" is meant a pressure that is not constant during the process, i.e. variable between the beginning and the end of the process.

The expression "external pH adjustment" refers to the addition of an alkali such as for example NaOH, KOH or ammonium carbonate, to maintain an alkaline pH.

Therefore, in the present invention, the raw material used, i.e. the alkaline solid waste, is alkaline enough, to avoid a further addition of an alkali, i.e. the pH is higher than 8.

In a preferred embodiment, the present invention relates to the use of substantially alkaline solid wastes containing accessible CaO and/or $Ca(OH)_2$ for implementing a process of sequestration of $CO_2$ under mineral form and possibly purifying a liquid effluent if contaminated by pollutants such as inorganic oxyanions and/or cations, wherein the liquid effluent is free from inorganic oxyanions and cations, and is in particular pure water.

The expression "free from inorganic oxyanions and cations" means that the oxyanions or the cations have been incorporated during the sequestration of $CO_2$ under mineral form, for example up to 20 mg of atomic selenium per gram of $Ca(OH)_2$ can be incorporated (see exemple 6), and therefore the liquid effluent contains only a residual part of oxyanions or cations and can be for example pure water such as demineralised water.

Therefore, in this embodiment the process allows the recycling of plant wastes and the reducing of carbon dioxide emissions.

In another preferred embodiment, the present invention concerns the use of substantially alkaline solid wastes containing accessible CaO and/or $Ca(OH)_2$ for implementing a process of sequestration of $CO_2$ under mineral form and possibly purifying a liquid effluent if contaminated by pollutants such as inorganic oxyanions and/or cations, wherein the liquid effluent contains inorganic oxyanions and/or cations.

In this embodiment, the liquid effluent, contaminated by pollutants such as inorganic oxyanions and/or cations, is decontaminated and leads to a liquid effluent free from inorganic oxyanions and cations.

Therefore, in this embodiment the process allows the recycling of plant wastes, the reducing of carbon dioxide emissions and the decontamination of liquid effluents contaminated by pollutants such as inorganic oxyanions and/or cations.

In another aspect, the present invention relates to a process of sequestration of $CO_2$ under mineral form and possibly purifying a liquid effluent if contaminated by pollutants such as inorganic oxyanions and/or cations, comprising:

a step of reacting a $CO_2$ source, introduced under an initial pressure, with a calcium hydroxide dispersion in a liquid effluent, thus forming a $CaCO_3$ suspension in said liquid effluent,
said dispersion being obtained by mixing substantially alkaline solid wastes containing
accessible CaO and/or $Ca(OH)_2$ with said liquid effluent.

The $CO_2$ source can be pure or concentrated $CO_2$ gas, i.e. $CO_2$ gas containing a small proportion of $SO_x$ or $NO_x$, or a stream containing a low concentration of $CO_2$ gas such as flue gas or industrial off-gas or a mixture of $CO_2$ gas with an inert gas such as, for example, nitrogen, argon or air.

By "initial pressure" is meant the pressure of the $CO_2$ source when it is introduced into the calcium hydroxyde dispersion.

The initial pressure is comprised from about 10 bars to about 40 bars.

The $CO_2$ source introduced react with the Ca(OH)2 according to the following reaction:

$$Ca(OH)_2 + CO_2 \rightarrow CaCO_3 + H_2O$$

The reaction time is function of the different alkaline solid wastes used but generally, the reaction is carried out during two hours.

The calcium carbonate obtained precipitates into the reactor leading to a suspension of $CaCO_3$.

In a preferred embodiment, in the process above defined, the liquid effluent is free from inorganic oxyanions and cations, and is in particular pure water.

In another preferred embodiment, the liquid effluent of the process of sequestration of carbon dioxide and of purifying a liquid effluent, above defined, contains inorganic oxyanions and/or cations.

In a more preferred embodiment, the inorganic oxyanions contained in the liquid effluent of the process above defined are selected from the group consisting of sulphate, phosphate, chromate, arsenate, molybdate, selenite, and lead, cadmium, copper, or cobalt salts.

In another preferred embodiment, the initial pressure of the $CO_2$ source of the process above defined is comprised from about 5 to about 40 bars, preferably from about 5 to about 30 bars, more preferably from about 5 to about 20 bars and in particular of about 10 bars.

Below 5 bars, the pressure is too low and the reaction rate is greatly lowered and above 40 bars, the process will generally be difficult to be implemented on a large scale.

In another preferred embodiment, the pressure at the end of the step of reacting the $CO_2$ source with the calcium hydroxide dispersion of the process above defined is the equilibrium pressure between $CO_2$ source and said $CaCO_3$ suspension.

Once the $CO_2$ source has been introduced, the pressure of the process corresponds to the initial pressure.

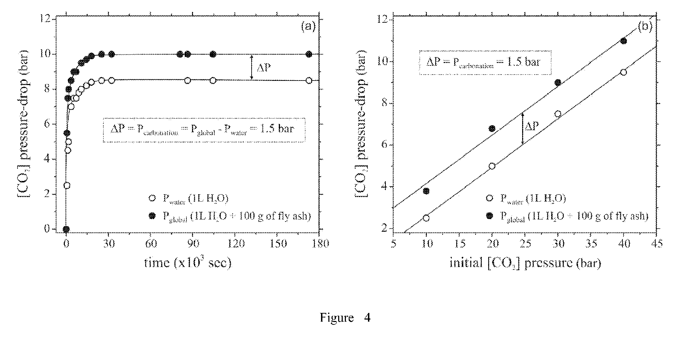

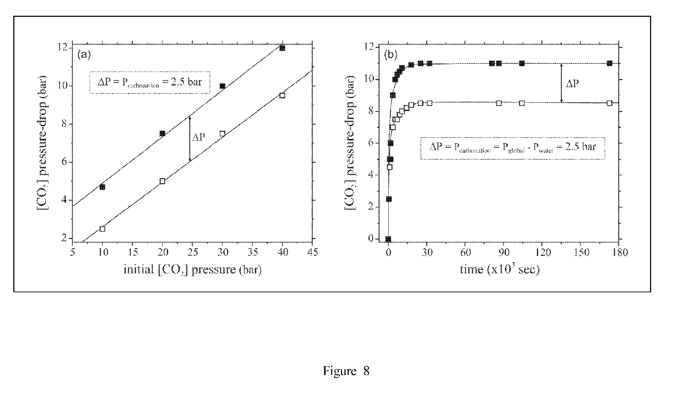

Then, when the reaction has been started, the $CO_2$ is consumed leading to a gradual decrease of the pressure of $CO_2$ to reach an equilibrium pressure between the gaseous phase and the suspension after carbonatation, i.e. when Ca $(OH)_2$ has completely disappeared (figure 4a, figure 4b, figure 8a and figure 8b).

The variation of the pressure during a reaction time of two hours is comprised from about 4 to about 12 bars for an initial pressure comprised from about 5 bars to 40 bars and therefore the equilibrium pressure is comprised from 1 to 28 bars.

In a more preferred embodiment, the temperature of the process above defined is comprised from about 10°C to about 60°C, preferably from about 15°C to 40°C, more preferably from about 18°C to 30°C.

If the temperature is below 10°C, the reaction rate is too low and if the temperature is above 60°C, the process will be difficult to be implemented on a large scale.

In a preferred embodiment, the substantially alkaline solid wastes of the process are selected from the list consisting of coal combustion fly-ash and alkaline paper mill wastes.

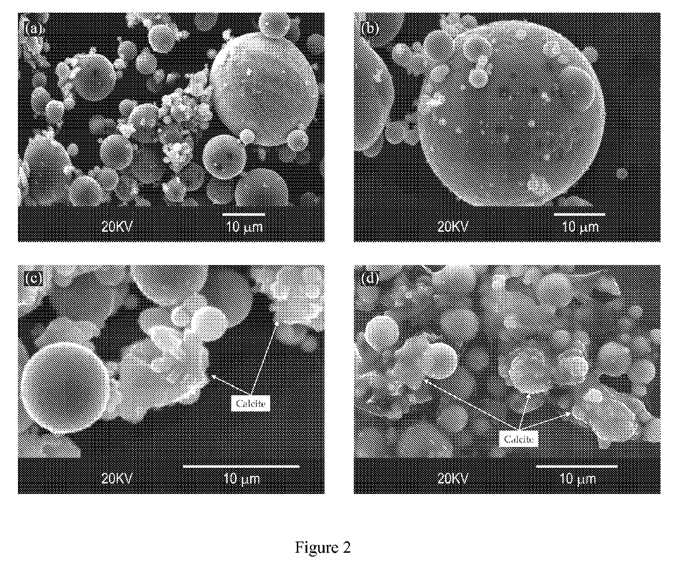

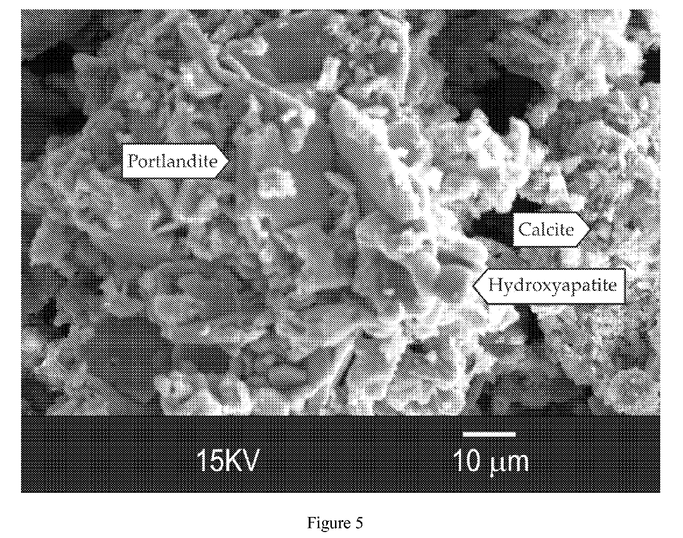

The coal combustion fly ash is a powder composed mainly of spherical microparticles collected from electrostatic precipitators located at the outlet of the chimney were combustion gases are liberated into the atmosphere (figure 2a and figure 2b). In the case of paper mill waste, this by-product, so-called calcium mud, is the rejection of the calcination and conversion of calcium carbonate to lime for the causticizing of the black liquor (figure 5).

The percentage of CaO and/or $Ca(OH)_2$ can be very different according to the origin of the various wastes: for example a coal combustion fly-ash contains about from about 4 wt.% of lime (CaO) to about 16 wt.% of lime (CaO) and a paper mill waste contains from about 55 wt.% of $Ca(OH)_2$ to about 70 wt.% of $Ca(OH)_2$.

Nevertheless, the percentage of CaO contained in the alkaline solid waste can be less than 4 wt.% or more than 16 wt. % and the percentage of $Ca(OH)_2$ can be less than 55 wt.% or more than 70 wt.%.

In a more preferred embodiment, coal combustion fly-ash used in the process above defined contains less than about 10% of CaO.

In the particular case of coal combustion fly-ash, the percentage of CaO contained in the fly-ash is low, less than 10%, but the yield is still good (81%, see example 2).

In another preferred embodiment, the process above defined comprises the following steps:

(a) contacting substantially alkaline solid wastes with a liquid effluent free from inorganic oxyanions and cations, in particular with pure water, to obtain a dispersion of $Ca(OH)_2$,

(b) heating the dispersion of $Ca(OH)_2$ at a temperature comprised from about 10°C to about 60°C, preferably from about 15°C to 40°C, more preferably from about 18°C to 30°C, to obtain a heated dispersion of $Ca(OH)_2$,

(c) introducing the $CO_2$ source into the heated dispersion of $Ca(OH)_2$ at an initial pressure comprised from about 5 bars to about 40 bars, preferably from about 5 bars to about 30 bars, more preferably from about 5 bars to about 20 bars and in particular of about 10 bars, to obtain a medium containing absorbed $CO_2$ into the heated dispersion of $Ca(OH)_2$,

(d) stirring said medium obtained in step c) at a temperature comprised from about 10°C to about 60°C, preferably from about 15°C to 40°C, more preferably from about 18°C to 30°C until complete exhaustion of $Ca(OH)_2$, to obtain a solid containing calcium carbonate,

(e) recovering the solid containing calcium carbonate.

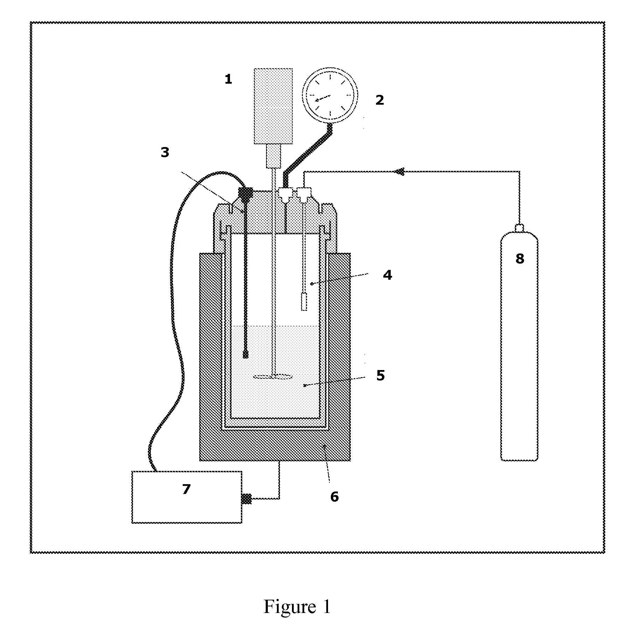

The schematic experimental system for this process is represented in figure 1.

In step a), the CaO is transformed into $Ca(OH)_2$ according the following equation:

$$CaO + H_2O \rightarrow Ca(OH)_2$$

In step b), heating is necessary to accelerate the reaction rate when CO2 is introduced.

In step c), the $CO_2$ source is introduced. In the case of the figure 1, the $CO_2$ presented is pure $CO_2$ but can also be any other source of $CO_2$ described above. In step d), the $CO_2$ reacts with Ca(OH)2 according the following reaction:

$$Ca(OH)_2 + CO_2 \rightarrow CaCO_3 + H_2O$$

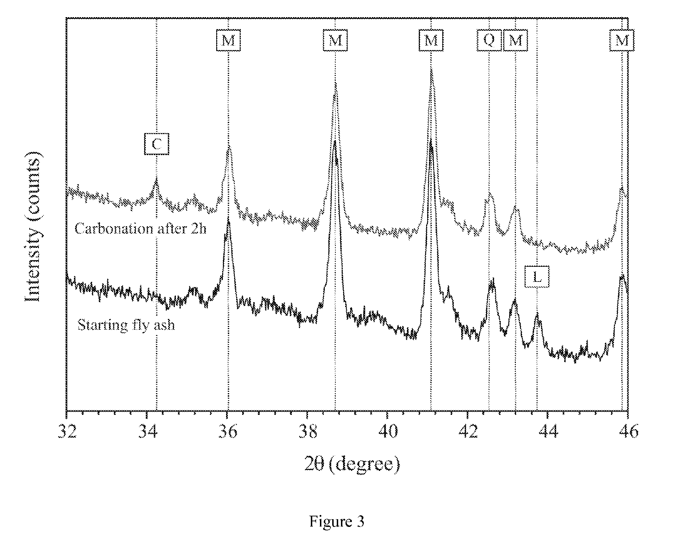

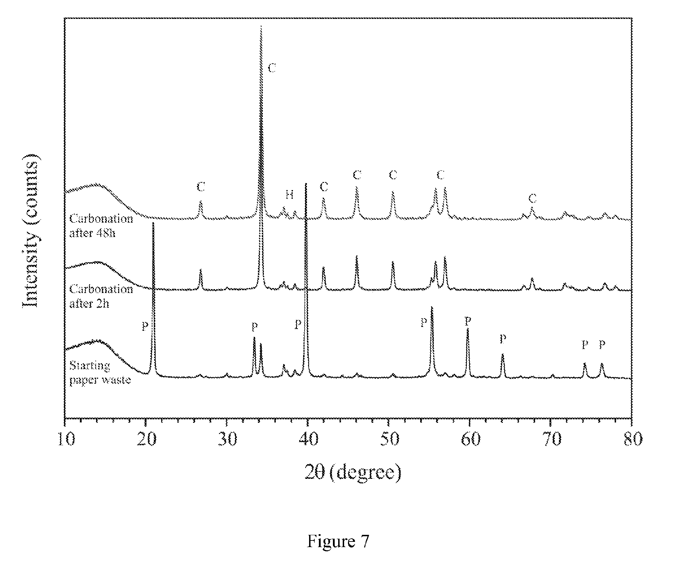

The raw material used, i.e. the alkaline solid waste allows to maintain the pH above 7 during the carbonatation until the complete exhaustion of $Ca(OH)_2$(figure 3 and 7), i.e. the complete reaction of $Ca(OH)_2$ with $CO_2$. The system reaches therefore an equilibrium stage wherein the pH is comprised from 6,5 to 7.5.

The reaction time is different in function of the raw material used, but is generally of about 2 hours.

In step e), the solid obtained is different according to the raw material used:

- when the raw material used is paper mill waste, it contains the calcium carbonate formed (figure 2c and figure 2d), as a majority, because this waste contains only $CaCO_3$ and portlandite $(Ca(OH)_2)$;

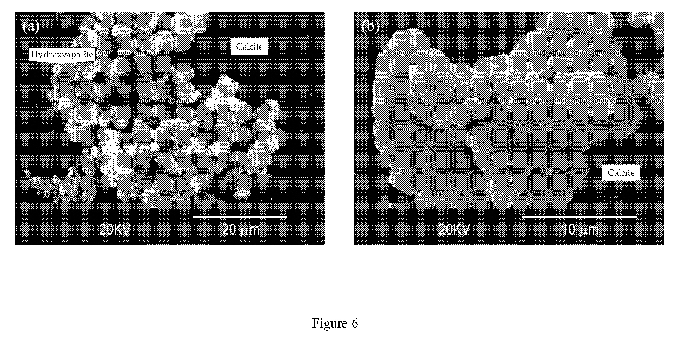

- when the raw material used is coal combustion fly-ash, it contains calcium carbonate among other minerals (figure 6) because fly-ash is composed of mullite (20.8 wt.%), quartz (4.5 %), lime (4.1%), anhydrite (1.3%), K-feldspar (2.5 %), magnetite (0.5 %) and a chalco-aluminosilicate glass phase (66.4%).

In a more preferred embodiment, the process above defined comprises the following steps:

(a) contacting substantially alkaline solid wastes with a liquid effluent containing inorganic oxyanions and/or cations to obtain a dispersion of $Ca(OH)_2$,

(b) heating the dispersion of $Ca(OH)_2$ at a temperature comprised from about 10°C to about 60°C, preferably from about 15°C to 40°C, more preferably from about 18°C to 30°C, to obtain a heated dispersion of $Ca(OH)_2$,

(c) introducing the $CO_2$ source into the heated dispersion of $Ca(OH)_2$ at an initial pressure comprised from about 5 bars to about 40 bars, preferably from about 5 bars to about 30 bars, more preferably from about 5 bars to about 20 bars and in particular of about 10 bars, to obtain a medium containing absorbed $CO_2$ into the heated dispersion of $Ca(OH)_2$,

(d) stirring said medium obtained in step c) at a temperature comprised from about 10°C to about 60°C, preferably from about 15°C to 40°C, more preferably from about 18°C to 30°C until complete exhaustion of $Ca(OH)_2$, to obtain a calcium carbonate precipitate containing inorganic oxyanions and/or cations,

(e) filtering the calcium carbonate precipitate to obtain a solid calcium carbonate containing inorganic oxyanions and/or cations on the one hand, and liquid effluent free from inorganic oxyanions and cations on the other hand.

The schematic experimental system for this process is the same as above (figure 1).

The steps a) to d) are similar to the previous described process, except the water free from oxyanions and cations has been replaced by water containing oxyanions and/or cations.

In step e) the solid obtained contains in addition oxyanions and/or cations that have been entrapped in $CaCO_3$.

**DESCRIPTION OF THE FIGURES.**

Figure 1 shows a schematic experimental system for mineral sequestration of $CO_2$ by aqueous carbonation of fly-ash in a stirred reactor. The $CO_2$ source used is pure $CO_2$ gas.

1: Stirring system
2: Pressure gauge
3: Thermo-couple
4: gas $CO_2$
5: 1L H2O + $CO_2$ aq + alkaline solid waste
6: Furnace
7:Reactor PARR 4843
8: $CO_2$

Figure 2a and 2b show SEM images of fly-ash before reaction and figure 2c and 2d show SEM images of calcite particles precipitated during $CO_2$ sequestration experiments.

Figure 3 shows a XRD spectra of starting fly-ash and solid products after carbonation during 2 h. demonstrating the total consumption of lime and the production of calcite. (C: Calcite, M: Mullite, Q: Quartz, L: Lime).

Figure 4a and 4b show the kinetic behaviour of pressure decrease in the reactor at 30°C and for 30 bar initial pressure of $CO_2$ (4a) and the linear correlation between the pressure decrease at equilibrium and the initial pressure of $CO_2$ (4b).

Figure 5 shows the SEM image of paper mill waste before experimentation showing the initial crystals of portlandite, calcite and hydroxyapatite.

Figure 6a and 6b show the SEM images of calcite particles precipitated during $CO_2$ sequestration experiments.

Figure 7 shows the XRD patterns of starting paper mill waste and solid products after carbonation during 2 and 48 h, demonstrating the total consumption of portlandite and the production of calcite (C: Calcite, P: Portlandite, H: Hydroxyapatite).

Figure 8a and 8b show the linear correlation between the pressure drop and the initial pressure of $CO_2$ for experiments at 30 °C, an initial pressure of $CO_2$ equal to 10, 20, 30 and 40 bar and 2 h of carbonation (8a), and the kinetic behaviour of the $CO_2$ pressure drop in the long-term experiment (48 h) at 30 °C and 30 bar of initial pressure of

$CO_2$ (8b). White squares: $P_{water}$ (1L $H_2O$) Black squares: $P_{global}$ (1L $H_2O$ + 20 g of paper waste)

In both, constant carbonation pressure drop of 2.5 bar is independent on the initial pressure of $CO_2$.

**EXAMPLES**

**Example 1: $CO_2$ sequestration experiments in a stirred reactor using coal combustion fly-ash and pure water**

One litre of high-purity water with electrical resistivity of 18.2 MΩ cm and 100g of fly-ash were placed in a titanium reactor (autoclave Parr with internal volume of two litres). The fly-ash particles were immediately dispersed by mechanical stirring (450 rpm). The dispersion (solution + solid particles) was then heated to 30 or 60°C using an oven specifically adapted to the reactor. When the dispersion temperature was reached, 10, 20, 30 or 40 bar of $CO_2$ (provided by Linde Gas S.A.) was injected in the reactor (see Fig. 1). This was the initial pressure of $CO_2$ which was equal to the total initial pressure in the system. After stirring during two hours, the reactor was removed from the heating system and was immersed into cold water. The reaction cell was depressurized for 15 minutes during the water cooling period. Then, water cooling at 30°C the reactor was disassembled, and the solid product was separated by centrifugation (30 minutes at 12,000 rpm), decanting the supernatant solutions. Finally, the solid product was dried directly in the centrifugation flasks for 48 h at 65°C.

**Example 2: The sequestered quantity of $CO_2$ by calcite precipitation using coal combustion fly-ash**

A simplified method was developed to estimate the sequestered quantity of $CO_2$ by carbonate precipitation. This method was partially described in the example 1. Herein, the pressure drop produced by the carbonation process of CaO (Eqs. 2 and 3):

$$CaO + H_2O \rightarrow Ca(OH)_2 \text{ Eq. 2} \qquad \text{Eq. 2}$$

$$Ca(OH)_2 + CO_2 \rightarrow CaCO_3 + H_2O \text{ Eq.3} \qquad \text{Eq. 3}$$

in the system was calculated by a simple pressure balance (Eq. 1):

$$P_{carbonation\_pressure-drop} = P_{global\_pressure-drop} - P_{water\_pressure-drop} \qquad \text{Eq. 1}$$

The carbonation pressure drop, $P_{carbonation\_pressure-drop}$ was equal to 1.5 bar for all experiments (Figure 4b). It was independent on the initial pressure of $CO_2$ (10, 20, 30, 40 bar) and was slightly affected by the temperature of reaction (30 and 60°C). The results of the pressure drop kinetics for 30 bar (as initial pressure of $CO_2$) are shown on Figure 4a. Here, it was observed that the equilibrium of pressure drop was reached after about five hours of solid-fluid interaction. Considering that $CO_2$ is an ideal gas, the quantity of $CO_2$ consumed by the carbonation process can be calculated as follows:

$$n_{CO2} = \frac{P_{carbonation\_pressure\_drop} V}{RT} \qquad \text{Eq. 4}$$

Using the measured value $P_{carbonation\_pressure-drop}$ = 1.5 bar, we calculated that 0.05954 mol of $CO_2$ were consumed by the carbonation process. Taking into account reactions (Eq. 2 and Eq. 3) and the fact that the fly-ash contains 4.1wt.% of lime (CaO), the carbonation efficiency CE can be calculated by the following expression:

$$CE = \frac{n_{CO2} * M_{CO2}}{\dfrac{w_{CaO}}{M_{CaO}} * M_{CO2}} * 100 \qquad \text{Eq. 5}$$

where, $n_{CO2}$ is the mol number of consumed $CO_2$, calculated by Eq. 4 (0.05954 mol), $M_{CO2}$ is the molar mass of $CO_2$

(44.01 g/mol), $w_{CaO}$ is the starting mass of CaO in the reactor (4.1g) and $M_{CaO}$ is the molar mass of CaO (56.077g/mol). The carbonation efficiency was equal to 82% after two hours of solid-fluid interactions at 30 and 60°C.

Theoretically one ton of fly-ash containing 4.1% of lime could sequester 32.17kg of $CO_2$. With our experimental protocol, 26.19kg of $CO_2$ per ton of fly-ash (yield 81%) could be successfully sequestered into stable calcite. Indeed, this is an attractive result concerning the ex-situ mineral sequestration of $CO_2$.

**Example 3: Characterization of the solid phase**

The mineralogical characterization of the starting material and solid products was carried out by X-ray diffraction (XRD, powder method) using a D501 SIEMENS diffractometer. Working conditions were CoKα monochromatic radiation (λ=1.7902 Å), 37.5 mA and 40 kV. The experimental measurement parameters were 12s counting time per 0.02° 2θ step in the 5-80° 2θ range. The detection is performed by a kevex Si(Li) detector. Morphological analyses were also characterized by means of a scanning electron microscopy (SEM), with a JEOL JSM-5410 instrument, equipped with an energy dispersive system (EDS) for the chemical microanalysis.

The results are shown in figure 2a-d, figure 5 and figure 6.

**Example 4: $CO_2$ sequestration experiments in a stirred reactor using paper mill waste and pure water**

The $CO_2$ sequestration experiments were conducted on a 2 L (total volume) closed titanium-lined pressure reactor (Parr Instrument Co., USA, Model 4843) equipped with a heating jacket (furnace) (Fig. 1). In each experiment, the autoclave was charged with 1L of Millipore MQ water (18.2 MΩ) and 20 g of paper mill waste approximately. The waste particles were immediately dispersed with mechanical agitation (450 rpm) and the dispersion heated to 30 or 60 °C. When the temperature was reached, 10, 20, 30 or 40 bar of $CO_2$ (provided by Linde Gas S.A.) was injected into the reactor by opening a valve and adjusting the pressure to the desired one, and the reaction was commenced. This initial pressure of $CO_2$ was equal to the total initial pressure in the system.

A summary of the experiences carried out and the initial experimental conditions is shown in Table 1 below.

A long-term experiment (48 hours) at 30 bar of initial pressure of $CO_2$ allowed us to both optimize the experimental duration of the remaining experiments at 2 hours and study the kinetic evolution of the carbonation process.

At the end of the experiment, the reactor was removed from the heating system and was immersed in cold water. The reaction cell was depressurized during the water cooling period (about 15 minutes). Then water cooling at 25 °C the reactor was disassembled, and the solid product was separated by centrifugation (30 minutes at 12,000 rpm), decanting the supernatant solutions. Finally, the solid product was dried directly in the centrifugation flasks for 48 h at 65 °C.

Solution saturation indexes with respect to solid phases (SI=log(IAP/$K_S$), where SI is the saturation index, IAP is the ion activity product and $K_S$ is the solid solubility product) and aqueous speciation of the leachates were calculated using the equilibrium geochemical speciation/mass transfer model PHREEQC (Parkhust and Appelo, 2005) and the database of the speciation model MINTEQ. Zero, negative or positive SI values indicate that the solutions are saturated, undersaturated and supersaturated, respectively, with respect to a solid phase (Table I).

**TABLE I**

| Experiment | Reactor content | Time (h) | Temp. (°C) | Initial $CO_2$ pressure (bar) | Final $CO_2$ pressure (bar) | $CO_2$ pressure-drop (bar) | Carbonation pressure (bar) | $SI_{calcite}$ |
|---|---|---|---|---|---|---|---|---|
| Experiment 1 | 1L pure water + 20 g of paper waste | 2 | 30 | 40 | 28 | 12 | 2.5 | 1.13 |
| Experiment 2 | 1L pure water + 20 g of paper waste | 2 | 30 | 30 | 20 | 10 | 2.5 | 1.25 |
| Experiment 3 | 1L pure water + 20 g of paper waste | 2 | 30 | 20 | 12.5 | 7.5 | 2.5 | 1.42 |
| Experiment 4 | 1L pure water + 20 g of paper waste | 2 | 30 | 10 | 5.3 | 4.7 | 2.2 | 1.71 |
| Experiment 5 | 1L pure water + 20 g of paper waste | 48 | 30 | 30 | 19 | 11 | 2.5 | 1.25 |
| Experiment 6 | 1L pure water + 20 g of paper waste | 2 | 60 | 30 | 21.5 | 8.5 | 3 | 1.52 |

**Example 5: Amount of sequestered $CO_2$ in a stirred reactor using paper mill waste and pure water.**

A simplified method was developed to estimate the quantity of $CO_2$ sequestered by carbonate precipitation. This method was partially described in the example 4.

Herein, the pressure drop produced by the carbonation process of $Ca(OH)_2$ (Eq. 3) in the system was calculated by a simple pressure balance (Eq. 1). Knowing the pressure drop values in each experience (Table 1), the amount of $CO_2$ consumed by calcite precipitation ($n_{carbonation\_CO2,real}$ in mol) could be calculated using the ideal gas law:

$$n_{carbonation\_CO_2,real} = \frac{P_{carbonation\_pressure-drop}V}{RT} \qquad (Eq.\ 6)$$

where $V$ is the reactor volume occupied with gas (1 L), $T$ is the reaction temperature ($\approx$ 303 °K) and $R$ is the gas constant (0.08314472 L bar K$^{-1}$ mol$^{-1}$).

In experiments at 30 °C and 2 h of experimental duration, the pressure drop by portlandite carbonation was around 2.5 bar, independently of initial $CO_2$ pressure (Fig. 8a). Although the results of the long-term experiment (48 h, 30 bar and 30 °C) show that the equilibrium is obtained after about 5 hours of solid-fluid interaction, the maximum pressure drop by carbonation is already reached at 2 hours of experiment (Fig. 8b), and thus the experimental duration of the remaining experiments was correctly optimized. According to Eq. 6, the real amount consumed by carbonation was of 0.09923 mol of $CO_2$.

Likewise, the theoretical amount of $CO_2$ ($n_{carbonation\_CO2,theoretical}$) that should be sequestered by carbonation process (i.e., if all calcium is carbonated) could be calculated based on both the stoichiometry of reaction (Eq. 3) and the quantity of portlandite contained into the paper mill waste (55 wt%):

$$n_{carbonation\_CO_2,theoretical} = \frac{w_{Ca(OH)_2}}{M_{Ca(OH)_2}} \qquad (Eq.\ 7)$$

where $M_{Ca(OH)2}$ is the molar mass of $Ca(OH)_2$ (74.093 g mol$^{-1}$) and $w_{Ca(OH)2}$ is the starting mass of $Ca(OH)_2$ in the reactor (8.69 g) which was calculated as follows:

$$w_{Ca(OH)_2} = m_{paper\_waste} x \left( \frac{\%_{portlandite}}{100} \right) x \left( 1 - \frac{\%_{water\_content}}{100} \right) \qquad (Eq.\ 8)$$

where $m_{paper\_waste}$ is the mass of paper mill waste used in the experiments (20 g), $\%_{portlahdite}$ is the percentage of portlandite in the waste (55 wt%) and $\%_{water\_content}$ is the water content percentage in the waste (21 wt%). The theoretical amount of $CO_2$ that should be sequestered is 0.11729 mol. This supposes a carbonation efficiency (*CE*) of 85% at 30 °C according to:

$$CE = \frac{n_{carbonation\_CO_2,real}}{n_{carbonation\_CO_2,theoretical}} x100 \qquad (Eq.\ 9)$$

In the experiment at high temperature (60 °C, 30 bar), the pressure drop by carbonation is slightly superior (3 bar), albeit the sequestered amount of $CO_2$ and the carbonation efficiency are very similar since this process depends inversely on the reaction temperature (Eq. 6).

Theoretically, the extrapolation of this experiment to real industrial scale would suppose a maximum $CO_2$

sequestration capacity of 258.54 kg of $CO_2$ per every ton of paper mill waste containing 55 wt% of portlandite. However, with our experimental protocol, 218.37 kg of $CO_2$ per every ton of paper mill waste (84%) could be successfully sequestered into stable calcite. Obviously, this is an attractive result concerning the mineral trapping of $CO_2$.

**Example 6: $CO_2$ sequestration experiments in a stirred reactor using alkaline solid waste and water containing oxyanions**

The operating mode is the same as in example 1 or 4, except that water containing oxyanions is used instead of pure water. The preliminary experiments carried out to scale laboratory show that proposed method is appropriated to study the uptake of toxic oxyanions from aqueous solutions.

For example, it was observed that the selenite oxyanion ($SeO_3^{2-}$) is removed satisfactory during carbonation process (up to 20 mg of atomic selenium per gram of $Ca(OH)_2$. Note, that in the polluted systems, a wastewater could contain up to 1 mg/L of selenium.

**Claims**

1.  Use of substantially alkaline solid wastes containing accessible CaO and/or $Ca(OH)_2$ for implementing a process of sequestration of $CO_2$ under mineral form and possibly purifying a liquid effluent if contaminated by pollutants such as inorganic oxyanions, and/or cations, comprising a step of reacting said alkaline solid wastes with said liquid effluent to form a calcium hydroxide dispersion, at a non isobaric pressure and without external pH adjustment, at a temperature comprised from about 10 to about 60°C.

2.  Use of substantially alkaline solid wastes containing accessible CaO and/or $Ca(OH)_2$ for implementing a process of sequestration of $CO_2$ under mineral form according to claim 1, wherein said liquid effluent is free from inorganic oxyanions and cations, and is in particular pure water.

3.  Use of substantially alkaline solid wastes containing accessible CaO and/or $Ca(OH)_2$ for implementing a process of sequestration of $CO_2$ under mineral form and purifying a liquid effluent according to claim 1, wherein said liquid effluent contains inorganic oxyanions and/or cations.

4.  A process of sequestration of $CO_2$ under mineral form and possibly purifying a liquid effluent if contaminated by pollutants such as inorganic oxyanions and/or cations, comprising:

    a step of reacting a $CO_2$ source, introduced under an initial pressure, with a calcium hydroxide dispersion in a liquid effluent, thus forming a $CaCO_3$ suspension in said liquid effluent,
    said dispersion being obtained by mixing substantially alkaline solid wastes containing accessible CaO and/or $Ca(OH)_2$ with said liquid effluent.

5.  The process according to claim 4, wherein said liquid effluent is free from inorganic oxyanions and cations, and is in particular pure water.

6.  The process of sequestration of carbon dioxide and of purifying a liquid effluent according to claim 4, wherein said liquid effluent contains inorganic oxyanions, and/or cations.

7.  The process according to any of claims 4 to 6, wherein said inorganic oxyanions are selected from the group consisting of sulphate, phosphate, chromate, arsenate, molybdate, selenite; and lead, cadmium, copper, or cobalt salts.

8.  The process according to any of claims 4 to 7, wherein the initial pressure of the $CO_2$ source is comprised from about 5 to about 40 bars, preferably from about 5 to about 30 bars, more preferably from about 5 to about 20 bars and in particular of about 10 bars.

9.  The process according to any of claims 4 to 8, wherein the pressure at the end of the step of reacting the $CO_2$ source with the calcium hydroxide dispersion is the equilibrium pressure between $CO_2$ source and said $CaCO_3$ suspension.

10. The process according to any of claims 4 to 9, wherein the temperature is comprised from about 10°C to about 60°C, preferably from about 15°C to 40°C, more preferably from about 18°C to 30°C.

11. The process according to any of claims 4 to 10, wherein said substantially alkaline solid wastes are selected from the list consisting of coal combustion fly-ash and alkaline paper mill wastes.

12. The process according to claim 11, wherein coal combustion fly-ash contains less than about 10% of CaO.

13. The process according to any of claims 4 to 12, comprising the following steps:

(a) contacting substantially alkaline solid wastes with a liquid effluent free from inorganic oxyanions and cations, in particular with pure water, to obtain a dispersion of $Ca(OH)_2$,
(b) heating the dispersion of $Ca(OH)_2$ at a temperature comprised from about 10°C to about 60°C, preferably from about 15°C to 40°C, more preferably from about 18°C to 30°C, to obtain a heated dispersion of $Ca(OH)_2$,
(c) introducing the $CO_2$ source into the heated dispersion of $Ca(OH)_2$ at an initial pressure comprised from about 5 bars to about 40 bars, preferably from about 5 bars to about 30 bars, more preferably from about 5 bars to about 20 bars and in particular of about 10 bars, to obtain a medium containing absorbed $CO_2$ into the heated dispersion of $Ca(OH)_2$,
(d) stirring said medium obtained in step c) at a temperature comprised from about 10°C to about 60°C, preferably from about 15°C to 40°C, more preferably from about 18°C to 30°C until complete exhaustion of $Ca(OH)_2$, to obtain a solid containing calcium carbonate,
(e) recovering the solid containing calcium carbonate.

14. The process according to any of claims 4 to 12, comprising the following steps:

(a) contacting substantially alkaline solid wastes with a liquid effluent containing inorganic oxyanions and/or cations to obtain a dispersion of $Ca(OH)_2$,
(b) heating the dispersion of $Ca(OH)_2$ at a temperature comprised from about 10°C to about 60°C, preferably from about 15°C to 40°C, more preferably from about 18°C to 30°C, to obtain a heated dispersion of $Ca(OH)_2$,
(c) introducing the $CO_2$ source into the heated dispersion of $Ca(OH)_2$ at an initial pressure comprised from about 5 bars to about 40 bars, preferably from about 5 bars to about 30 bars, more preferably from about 5 bars to about 20 bars and in particular of about 10 bars, to obtain a medium containing absorbed $CO_2$ into the heated dispersion of $Ca(OH)_2$,
(d) stirring said medium obtained in step c) at a temperature comprised from about 10°C to about 60°C, preferably from about 15°C to 40°C, more preferably from about 18°C to 30°C until complete exhaustion of $Ca(OH)_2$, to obtain a calcium carbonate precipitate containing inorganic oxyanions and/or cations,
(e) filtering the calcium carbonate precipitate to obtain a solid calcium carbonate containing inorganic oxyanions and/or cations on the one hand, and liquid effluent free from inorganic oxyanions and cations on the other hand.

Figure 1

Figure 2

Figure 3

Figure 4

Figure 5

Figure 6

Figure 7

Figure 8

**European Patent Office**

**EUROPEAN SEARCH REPORT**

Application Number

EP 07 12 3303

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2007/071633 A (SHELL INTERNATIONALE RESEARCH MAATSCHAPPIJ) 28 June 2007 (2007-06-28) * claims 1-10; examples 1,2 * ----- | 1-14 | INV. B01D53/62 C01F11/18 |
| X,D | US 2004/228788 A1 (T. NAGAI ET AL.) 18 November 2004 (2004-11-18) * paragraphs [0025] - [0031]; claims 1-12 * ----- | 1-14 | |
| X | US 5 584 905 A (H.W. WILSON) 17 December 1996 (1996-12-17) * the whole document * ----- | 1-14 | |

| | |
|---|---|
| | TECHNICAL FIELDS SEARCHED (IPC) |
| | B01D C01F |

The present search report has been drawn up for all claims

| Place of search | Date of completion of the search | Examiner |
|---|---|---|
| Munich | 7 July 2008 | Luethe, Herbert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 07 12 3303

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2008

| Patent document cited in search report | | Publication date | Patent family member(s) | | Publication date |
|---|---|---|---|---|---|
| WO 2007071633 | A | 28-06-2007 | NONE | | |
| US 2004228788 | A1 | 18-11-2004 | JP | 2004261658 A | 24-09-2004 |
| | | | WO | 2004076033 A1 | 10-09-2004 |
| US 5584905 | A | 17-12-1996 | AU | 4742096 A | 24-07-1996 |
| | | | WO | 9620779 A1 | 11-07-1996 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040228788 A
- US 5792440 A

- WO 2007071633 A

**Non-patent literature cited in the description**

- **Roundhill, D. M. ; Koch, H. F.** *Chem. Soc. Rev.,* 2002, vol. 31, 60
- **Harper, T. R. ; Kingham, N. W.** *Water Environ. Res.,* 1992, vol. 64, 200
- **Fox, K. R. ; Sorg, T. J.** *J. Am. Water Works Assoc.,* 1987, vol. 79, 81
- **Eary, L. E. ; Rai, D.** *Environ. Sci. Technol.,* 1988, vol. 28, 972
- **De Carlo, E. H. ; Thomas, D. M.** *Environ. Sci. Technol.,* 1985, vol. 19, 538
- **Peng, F. F. ; Pingkuan, D.** *Ind. Eng. Chem. Res.,* 1994, vol. 33, 922
- **Bachu, S.** Sequestration of CO2 in geological media: criteria and approach for site selection in response to climate change. *Energy Convers. Manage.,* 2000, vol. 41, 953-970
- **Bachu, S.** Sequestration of CO2 in geological media in response to climate change: road map for site selection using the transform of the geological space into the CO2 phase space. *Energy Convers. Manage.,* 2002, vol. 43, 87-102

- **Bachu, S ; Adams, J. J.** Sequestration of CO2 in geological media in response to climate change: capacity of deep saline aquifers to sequester CO2 in solution. *Energy Convers. Manage.,* 2003, vol. 44, 3151-3175
- **Friedmann, S. J.** Geological Carbon Dioxide Sequestration. *Elements,* 2007, vol. 3, 179-184
- **Soong, Y. ; Fauth, D. L. ; Howard, B. H. ; Jones, J. R. ; Harrison, D. K. ; Goodman, A. L. ; Gray, M. L. ; Frommell, E. A.** CO2 sequestration with brine solution and fly ashes. *Energy Convers. Manage.,* 2006, vol. 47, 1676-1685
- **Montes-Hernandez G. ; Renard F. ; Geoffroy N. ; Charlet L. ; Pironon J.** Calcite precipitation from CO2-H2O-Ca(OH)2 slurry under high pressure of CO2. *J. Cryst. Growth,* 2007, vol. 308, 228-236
- **Domingo et al.** J. Calcite precipitation by a high-pressure CO2 carbonation route. *J. of Supercritical Fluids,* 2006, vol. 36, 202-215